# EUROPEAN PATENT SPECIFICATION

(11) **EP 2 350 842 B1**
(45) Date of publication and mention of the grant of the patent: **25.02.2015**
(21) Application number: 08877865.9
(22) Date of filing: 30.10.2008
(51) Int. Cl.: G06F 13/14, G06F 13/36, G06F 12/08

(54) **REDUNDANT ARRAY OF INDEPENDENT DISKS (RAID) WRITE CACHE SUB-ASSEMBLY**
SCHREIB-CACHE-BAUGRUPPE FÜR REDUNDANTE ARRAYS UNABHÄNGIGER DATENTRÄGER (RAID)
SOUS-ENSEMBLE DE MÉMOIRE CACHE D'ÉCRITURE D'ENSEMBLE REDONDANT DE DISQUES INDÉPENDANTS (RAID)

(43) Date of publication of application: 03.08.2011
(73) Proprietor: Hewlett-Packard Development Company, L.P., Houston, TX 77070 (US)
(72) Inventor: ELLIOTT, Robert, C., Houston Texas 77070 (US); FOSTER, Joseph, E., Houston Texas 77070 (US); TAVALLAEI, Siamak, Houston Texas 77070 (US)
(74) Representative: Liesegang, Eva
(86) International application number: PCT/US2008/081700
(87) International publication number: WO 2010/050947

(56) References cited:
- US-A- 5 758 187
- US-A- 6 098 114
- US-A1- 2007 033 432
- US-B1- 6 446 220
- US-B2- 6 687 765
- US-B2- 7 272 686

## Description

### BACKGROUND

Redundant Array of Independent Disks (RAID) technology combines multiple small, inexpensive disk drives into an array which yields performance exceeding that of one large and expensive disk drive. RAID provides benefits such as redundancy, lower latency, higher bandwidth, and data recoverability. RAID arrays appear to a computer to be one or more logical storage units or virtual disk drives.

There are two existing approaches to RAID: hardware-based RAID and software-based RAID. Hardware-based RAID manages drives independently from the host and presents one or more virtual disks to the host. In general, hardware-based RAID employs a RAID controller card that interfaces between the disk drives and the host. The benefits of hardware-based RAID include: minimizing host processor overhead, minimizing host system memory overhead, and providing a non-volatile RAID write cache. However, hardware-based RAID represents an undesirable expense to many consumers.

Software-based RAID implements the various RAID levels in the host. Software-based RAID is inexpensive and can provide high performance. However, it requires host processor and system memory overhead. Further, since software-based RAID relies on volatile system memory, data may be lost if a write transaction is interrupted (e.g., by power failure) before completing.

A computer system which includes a RAID architecture is known from the patent application US 6,446,220 B1. Therein, the RAID algorithms may either be executed on adapter cards which are external to computers. Alternatively, the components and functionality of the adapters may be implemented in the computers.

From the patent application US 2007/0033432 A1 a RAID controller is known which may be connected to a host computer via a host interface.

The invention is defined according to the computer system of claim 1 and the method of claim 9.

### BRIEF DESCRIPTION OF THE DRAWINGS

For a detailed description of exemplary embodiments of the invention, reference will now be made to the accompanying drawings in which:
Fig. 1 illustrates a Redundant Array of Independent Disks (RAID) system in accordance with embodiments;
Fig. 2 illustrates a computer system in accordance with embodiments;
Fig. 3A and 3B illustrate RAID write cache cards or sub-assemblies in accordance with embodiments; and
Fig. 4 shows a method in accordance with embodiments.

### NOTATION AND NOMENCLATURE

Certain terms are used throughout the following description and claims to refer to particular system components. As one skilled in the art will appreciate, computer companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect, direct, optical or wireless connection. Thus, if a first device couples to a second device, that connection may be through a direct connection, through an indirect connection via other devices and connections, through an optical connection, or through a wireless connection. The term "system" refers to a collection of two or more hardware and/or software components, and may be used to refer to an electronic device or devices or a sub-system thereof. Further, the term "software" includes any executable code capable of running on a processor, regardless of the media used to store the software. Thus, code stored in non-volatile memory, and sometimes referred to as "embedded firmware," is included within the definition of software.

### DETAILED DESCRIPTION

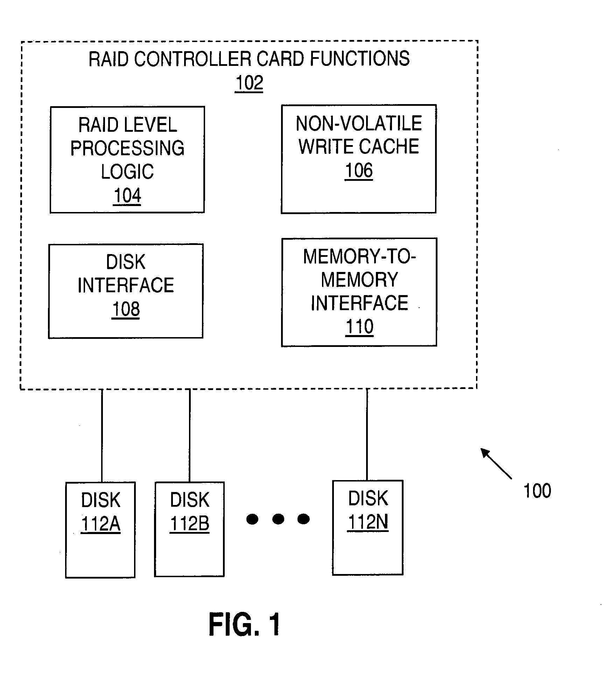

Embodiments of the disclosure provide Redundant Array of Independent Disks (RAID) functionality without a RAID controller card. In at least some embodiments, software-based RAID is enhanced by providing a non-volatile RAID write cache on a peripheral communication bus (*e.g.,* a Peripheral Component Interconnect Express (PCle) bus). Fig. 1 illustrates a RAID system 100 in accordance with various embodiments. As shown, the RAID system 100 provides RAID controller card functions 102 to support a plurality of disks 112A-112N. The RAID controller card functions 102 include, but are not limited to, RAID level processing logic 104, a non-volatile write cache 106, a disk interface 108, and a memory-to-memory interface 110. Rather than implement a traditional RAID controller card, embodiments distribute the functions 102 to other components of a computer system as described herein.

In accordance with embodiments, the functions 102 support known RAID operations such as striping and data mirroring. Striping involves dividing data into uniformly-sized blocks and spreading the blocks over at least some of the disks 112A-112N. If read/write heads of the disks 112A-112N are active simultaneously, striping can improve the speed of data transfers. In general, data mirroring provides data redundancy. RAID-0, RAID-1, RAID-5, and RAID-6 are examples of data redundancy schemes.

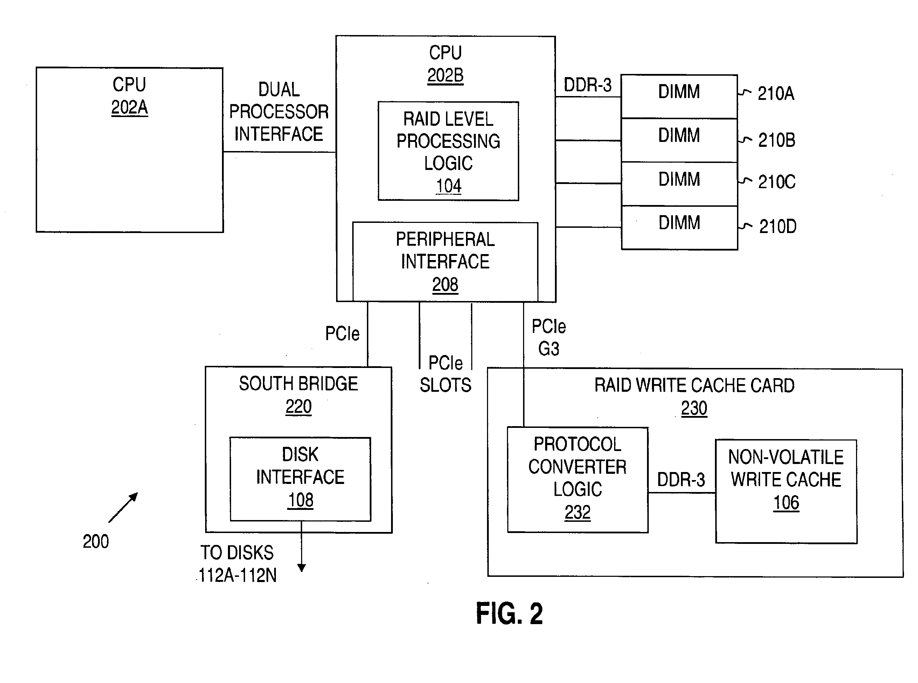

Fig. 2 illustrates a computer system 200 in accordance with embodiments. As shown, the computer system 200 comprises CPUs 202A and 202B, which are connected via a dual processor interface. In alternative embodiments, additional or fewer CPUs may be implemented. Regardless of the number of CPUs, at least one of the CPUs (*e*.*g*., CPU 202B) comprises RAID level processing logic 104 to support the RAID operations described previously. The RAID level processing logic 104 may comprise hardware, firmware and/or software. In at least some embodiments, the RAID level processing logic 104 corresponds to software-based RAID functions.

The CPU 202B communicates with a plurality of Dual Inline Memory Modules (DIMMs) 210A-210D via a memory module protocol such as Double Data Rate 3 (DDR-3). Alternatively, other memory module protocols may be used. As shown, the CPU 202B also comprises a peripheral interface 208, which may be a Peripheral Component Interconnect Express (PCle) interface. In such a case, communications between the peripheral interface 208 and various internal or external components of the computer system 200 are based on the PCle protocol.

In some embodiments, the peripheral interface 208 couples to a South Bridge 220 having the disk interface 108. In such embodiments, communications between the peripheral interface 208 and the South Bridge 220 may be based on the PCle protocol or other protocols. Further, communications between the South Bridge 220 and disks 112A-112N may be based on the Serial Attached SCSI (SAS) protocol, the Serial ATA (SATA) protocol, the Universal Serial Bus (USB) protocol, or another communication protocol implemented by the disk interface 108.

The peripheral interface 208 also couples to a RAID write cache card or sub-assembly 230 (*i.e.,* the components may assembled on a card or other location). As shown, the RAID write cache card or sub-assembly 230 comprises protocol converter logic 232 coupled to the non-volatile write cache 106. The protocol converter logic 232 converts communication bus data received from the peripheral interface 208 to memory module data for storage in the non-volatile write cache 106. As an example, the protocol converter logic 232 may convert PCle Generation 3 data to DDR-3 data and vice versa. In accordance with embodiments, the non-volatile write cache 106 comprises Dynamic Random Access Memory (DRAM), a power source (*e*.*g*., a battery) and, in some embodiments, a Flash memory.

Write caching as provided by the non-volatile write cache 106 is based on the principle that writing to cache is faster than writing to disk and is a cost-effective way to improve I/O performance of a RAID system (*e*.*g*., RAID system 100). In a write transaction, write data is written to cache and the write transaction is acknowledged as "complete" to the host that issued the write. Some time later, the cached write may be written or flushed to disk. When the host receives the "complete" acknowledgement, it is assumed that the data is permanently stored on disk. If I/O components lose power, write caching can cause incorrect data to be delivered to applications and can corrupt databases when power is restored. To ameliorate or eliminate such problems, the non-volatile write cache 106 stores information that can be used to complete writes that were in progress when the computer system 200 recovers from a crash or power loss.

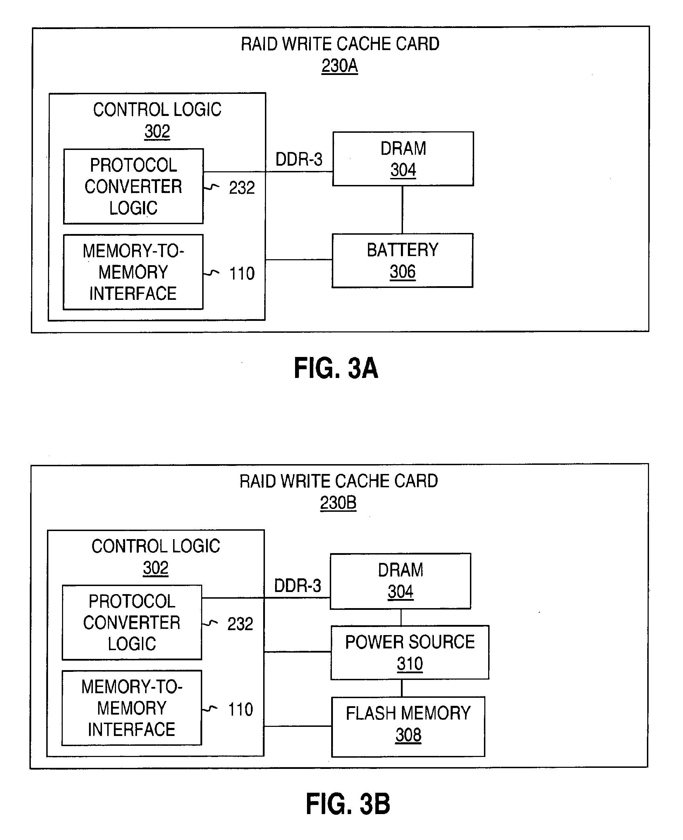

Fig. 3A illustrates a RAID write cache card or sub-assembly 230A in accordance with various embodiments. As shown, the RAID write cache card or sub-assembly 230A comprises control logic 302 (*e.g.,* an application specific integrated circuit (ASIC) or other semiconductor device) having the protocol converter logic 232 and the memory-to-memory interface 110. In some embodiments, the control logic 302 corresponds to a field programmable gate array (FPGA). Also, the memory-to-memory interface 110 may correspond to a Direct Memory Access (DMA) interface. In some embodiments, the CPU 202B comprises at least some of the memory-to-memory interface 110 or provides an additional or alternative memory-to-memory interface.

The RAID write cache card or sub-assembly 230A also comprises DRAM 304 and a battery 306 that provides power to the control logic 302 and/or the DRAM 304 even if the computer system 200 crashes or loses power. Together, the DRAM 304 and the battery 308 represent a battery-backed DRAM or, more generally, some non-volatile storage. When the computer system 200 has recovered, information stored in the DRAM 304 can be used to finalize RAID writes that were in process when the computer system 200 crashed or lost power.

Fig. 3B illustrates a RAID write cache card or sub-assembly 230B in accordance with embodiments. As shown, the RAID write cache card or sub-assembly 230B comprises control logic 302 having the protocol converter logic 232 and the memory-to-memory interface 110 (*e.g.,* a DMA interface). In some embodiments, the CPU 202B comprises at least some of the memory-to-memory interface 110 or provides an additional or alternative memory-to-memory interface 110.

The RAID write cache card or sub-assembly 230B also comprises DRAM 304, a Flash memory 308 and a power source 310 (*e.g.,* a battery or capacitor). The power source 310 provides power to the control logic 302, the DRAM 304, and/or the Flash memory 308 even if the computer system 200 crashes or loses power. Together, the DRAM 304, the Flash memory 308 and the power source 310 represent non-volatile storage. In some embodiments, upon detection of a computer system 200 crash or power loss, the power source 310 enables data to be transferred from the DRAM 304 to the Flash memory 308 via the memory-to-memory interface 110. When the computer system 200 has recovered, data is transferred from the Flash memory 308 back to the DRAM 304 and the information stored in the DRAM 304 can be used to finalize writes that were in process when the computer system 200 crashed or lost power.

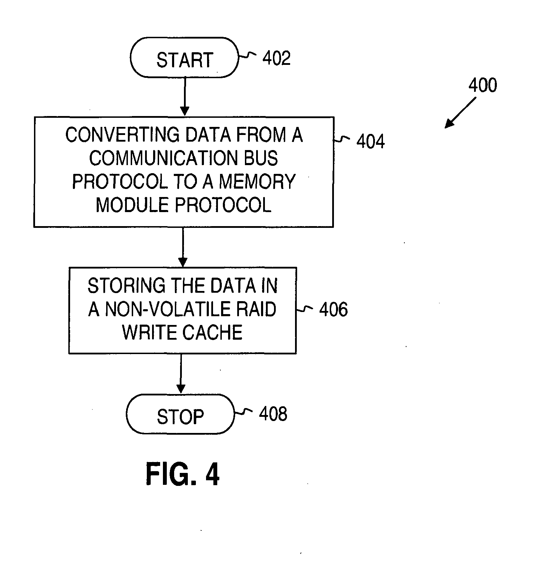

Fig. 4 illustrates a method 400 in accordance with embodiments. As shown, the method 400 starts at block 402 and continues by converting data from a communication bus protocol to a memory module protocol (block 404). The data is stored in a non-volatile RAID write cache (block 406) and the method 400 ends at block 408. In at least some embodiments, the method 400 may also include performing memory-to-memory operations for the non-volatile RAID write cache. As an example, the method 400 may involve determining when a computing system crashes or loses power and, in response, transferring data from DRAM to a Flash memory. The DRAM and the Flash memory may be part of a RAID write cache card or sub-assembly.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A computer system (200), comprising:
a processor (202);
a disk interface (108) coupled to the processor (202);
a communication bus external to the processor (202); and
**characterized in that** the computer system (200) comprises
a Redundant Array of Independent Disks (RAID) write cache sub-assembly (230) coupled to the communication bus external to the processor (202), the RAID write cache sub-assembly (230) having non-volatile storage (106),
wherein the processor (202) is configured to perform at least some RAID controller operations.

2. The computer system (200) of claim 1, wherein the non-volatile storage (106) comprises a battery-backed Dynamic Random Access Memory (DRAM) (304, 306).

3. The computer system (200) of claim 1, wherein the non-volatile storage (106) comprises Dynamic Random Access Memory (DRAM) (304), a power source (310) and Flash memory (308).

4. The computer system (200) of claim 3, wherein the RAID write cache sub-assembly (230) further comprises a battery (306) and Direct Memory Access (DMA) logic for transferring data from DRAM (304) to a Flash memory (308) when the computing system loses power.

5. The computer system (200) of claim 1, further comprising a chipset (220) associated with the processor (202), wherein the chipset (220) comprises logic for communicating with RAID disk drives (112).

6. The computer system (200) of claim 1, wherein the RAID write cache sub-assembly (230) further comprises logic for converting data from a protocol of the communication bus to a Dynamic Random Access Memory (DRAM) protocol and vice versa.

7. The computer system (200) of claim 1, wherein the communication bus corresponds to a PCI-Express bus and wherein the RAID write cache sub-assembly comprises a PCI-Express compatible card.

8. The computer system (200) of claim 2, wherein the RAID write cache sub-assembly (230) further comprises a Direct Memory Access (DMA) interface (110) for performing memory-to-memory operations for the battery-backed RAID write cache (106).

9. A method (400) for a computer system comprising a processor, a disk interface (108) coupled to the processor (202) and a Redundant Array of Independent Disks (RAID) write cache sub-assembly (230), **characterized by**:
converting (404) data from a communication bus protocol to a memory module protocol in the RAID write cache sub-assembly (230);
storing (406) the data in a non-volatile RAID write cache (106), and
performing at least some RAID controller operations in the processor (202).

10. The method (400) of claim 9, further comprising performing memory-to-memory operations for the non-volatile RAID write cache.

11. The method (400) of claim 9, further comprising determining when a computing system (200) loses power and, in response, transferring data from Dynamic Random Access Memory (DRAM) (304) to a Flash memory (308).

## Patentansprüche

1. Computersystem (200), umfassend:
einen Prozessor (202);
eine Datenträgerschnittstelle (108), die an den Prozessor (202) gekoppelt ist;
einen dem Prozessor (202) externen Kommunikationsbus; und
**dadurch gekennzeichnet, dass** das Computersystem (200) Folgendes umfasst:
eine Schreib-Cache-Baugruppe (230) für eine "Redundante Anordnung Unabhängiger Festplatten" (RAID), die an den dem Prozessor (202) externen Kommunikationsbus gekoppelt ist, wobei die RAID-Schreib-Cache-Baugruppe (230)
einen nicht flüchtigen Speicher (106) hat,
wobei der Prozessor (202) dazu konfiguriert ist, mindestens einige RAID-Steuerungsvorgänge durchzuführen.

2. Computersystem (200) nach Anspruch 1, wobei der nicht flüchtige Speicher (106) einen batteriegestützten dynamischen Direktzugriffsspeicher (DRAM) (304, 306) umfasst.

3. Computersystem (200) nach Anspruch 1, wobei der nicht flüchtige Speicher (106) einen dynamischen Direktzugriffsspeicher (DRAM) (304), eine Stromquelle (310) und einen Flash-Speicher (308) umfasst.

4. Computersystem (200) nach Anspruch 3, wobei die RAID-Schreib-Cache-Baugruppe (230) ferner eine Batterie (306) und eine Speicherdirektzugriffs (DMA)-Logik für das Übertragen von Daten vom DRAM (304) zu einem Flash-Speicher (308) umfasst, wenn das Rechensystem keinen Strom hat.

5. Computersystem (200) nach Anspruch 1, ferner umfassend einen zum Prozessor (202) gehörigen Chip-Satz (220), wobei der Chip-Satz (220) eine Logik für das Kommunizieren mit RAID-Plattenlaufwerken (112) umfasst.

6. Computersystem (200) nach Anspruch 1, wobei die RAID-Schreib-Cache-Baugruppe (230) ferner eine Logik für das Konvertieren von Daten aus einem Protokoll des Kommunikationsbuses in ein Protokoll des dynamischen Direktzugriffsspeichers (DRAM) und umgekehrt umfasst.

7. Computersystem (200) nach Anspruch 1, wobei der Kommunikationsbus einem PCI-Express-Bus entspricht, und wobei die RAID-Schreib-Cache-Baugruppe eine PCI-Express-kompatible Platine umfasst.

8. Computersystem (200) nach Anspruch 2, wobei die RAID-Schreib-Cache-Baugruppe (230) ferner eine Speicherdirektzugriffs (DMA)-Schnittstelle (110) für das Durchführen von Speicher-zu-Speicher-Vorgängen für den batteriegestützten RAID-Schreib-Cache (106) umfasst.

9. Verfahren (400) für ein Computersystem, das einen Prozessor, eine an den Prozessor (202) gekoppelte Datenträgerschnittstelle (108) und eine Schreib-Cache-Baugruppe (230) für eine "Redundante Anordnung Unabhängiger Festplatten" (RAID) umfasst, **gekennzeichnet durch**:
Konvertieren (404) von Daten aus einem Protokoll eines Kommunikationsbuses in ein Protokoll eines Speichermoduls in der RAID-Schreib-Cache-Baugruppe (230);
Speichern (406) der Daten in einem nicht flüchtigen RAID-Schreib-Cache (106) und
Durchführen von mindestens einigen RAID-Steuerungsvorgängen im Prozessor (202).

10. Verfahren (400) nach Anspruch 9, ferner umfassend das Durchführen von Speicher-zu-Speicher-Vorgängen für den nichtflüchtigen RAID-Schreib-Cache.

11. Verfahren (400) nach Anspruch 9, ferner umfassend das Bestimmen, wenn ein Computersystem (200) keinen Strom hat, und als Reaktion darauf das Übertragen von Daten vom dynamischen Direktzugriffsspeicher (DRAM) (304) zu einem Flash-Speicher (308).

## Revendications

1. Système d'ordinateur (200), comprenant :
un processeur (202) ;
une interface disque (108) couplée au processeur (202) ;
un bus de communication externe au processeur (202) ; et
**caractérisé par le fait que** le système d'ordinateur (200) comprend :
un sous-ensemble cache d'écriture d'ensemble redondant de disques indépendants (RAID) (230) couplé au bus de communication externe au processeur (202), le sous-ensemble cache d'écriture RAID (230) ayant un dispositif de stockage non-volatile (106),
le processeur (102) étant configuré pour réaliser au moins certaines opérations de contrôleur RAID.

2. Système d'ordinateur (200) selon la revendication 1, dans lequel le dispositif de stockage non-volatile (106) comprend une mémoire vive dynamique (DRAM) à batterie de secours (304, 306).

3. Système d'ordinateur (200) selon la revendication 1, dans lequel le dispositif de stockage non-volatile (106) comprend une mémoire vive dynamique (DRAM) (304), une source d'alimentation (310) et une mémoire flash (308).

4. Système d'ordinateur (200) selon la revendication 3, dans lequel le sous-ensemble cache d'écriture RAID (230) comprend en outre une batterie (306) et une logique d'accès direct en mémoire (DMA) pour transférer des données de la DRAM (304) à une mémoire flash (308) lorsque le système informatique perd l'alimentation.

5. Système d'ordinateur (200) selon la revendication 1, comprenant en outre un jeu de puces (220) associé au processeur (202), le jeu de puces (220) comprenant une logique pour communiquer avec des lecteurs (112) de disques RAID.

6. Système d'ordinateur (200) selon la revendication 1, dans lequel le sous-ensemble cache d'écriture RAID (230) comprend en outre une logique pour convertir des données d'un protocole du bus de communication en un protocole de mémoire vive dynamique (DRAM), et réciproquement.

7. Système d'ordinateur (200) selon la revendication 1, dans lequel le bus de communication correspond à un bus PCI-Express et dans lequel le sous-ensemble cache d'écriture RAID comprend une carte compatible PCI-Express.

8. Système d'ordinateur (200) selon la revendication 2, dans lequel le sous-ensemble cache d'écriture RAID (230) comprend en outre une interface d'accès direct en mémoire (DMA) (110) pour réaliser des opérations de mémoire à mémoire pour le cache d'écriture RAID à batterie de secours (106).

9. Procédé (400) pour un système d'ordinateur comprenant un processeur, une interface disque (108) couplée au processeur (202), et un sous-ensemble cache d'écriture d'ensemble redondant de disques indépendants (RAID) (230), **caractérisé par** :
la conversion (404) de données d'un protocole de bus de communication en un protocole de module de mémoire dans le sous-ensemble cache d'écriture RAID (230) ;
le stockage (406) des données dans un cache d'écriture RAID non-volatile (106) ; et
la réalisation d'au moins certaines opérations de contrôleur RAID dans le processeur (202).

10. Procédé (400) selon la revendication 9, comprenant en outre la réalisation d'opérations de mémoire à mémoire pour le cache d'écriture RAID non-volatile.

11. Procédé (400) selon la revendication 9, comprenant en outre la détermination du moment où un système informatique (200) perd l'alimentation et, en réponse, le transfert de données de la mémoire vive dynamique (DRAM) (304) à une mémoire flash (308).
